# EUROPÄISCHE PATENTSCHRIFT

(11) **EP 2 202 866 B1**
(45) Veröffentlichungstag und Bekanntmachung des Hinweises auf die Patenterteilung: **16.04.2014**
(21) Anmeldenummer: 08021771.4
(22) Anmeldetag: 16.12.2008
(51) Int. Cl.: H02J 7/35, H02J 3/38

(54) **Photovoltaikmodulanordnung**
Photovoltaic module assembly
Agencement de module photovoltaïque

(43) Veröffentlichungstag der Anmeldung: 30.06.2010
(73) Patentinhaber: SMA Solar Technology AG, 34266 Niestetal (DE)
(72) Erfinder: Falk, Andreas, 34131 Kassel (DE)
(74) Vertreter: Walther, Robert

(56) Entgegenhaltungen:
- DE-A1- 10 020 537
- US-A1- 2005 139 259

## Beschreibung

Die Erfindung betrifft eine Photovoltaikmodulanordnung nach dem Oberbegriff des Anspruches 1.

Bekannt sind Kraftwerksanlagen zur Erzeugung elektrischer Energie mit Solar- bzw. Photovoltaikmodulen und zur Einspeisung in ein Energieversorgungsnetz. Die Photovoltaikmodule sind zu Photovoltaikmodulfeldem gruppiert. Um die von den Photovoltaikmodulen erzeugte Gleichspannung in eine netzkonforme Wechselspannung umzuwandeln, werden Wechselrichter bzw. Stromrichter eingesetzt. Derartige Anlagen weisen eine relativ hohe Leistung auf, so dass die Anordnung und Erdung von Photovoltaikmodulfeldern und Stromrichtern zu Problemen führt.

Derartige große Solaranlagen, die auch als Solarkraftwerke bezeichnet werden, weisen eine Vielzahl von Photovoltaikmodulen, auch Solargeneratoren genannt, auf. Diese werden in Reihe zu sogenannten Strings verschaltet. Strings können wiederum parallel zu Modulfeldem geschaltet werden.

Bekannt ist es, dass für jeden String oder eine bestimmte Anzahl von parallelen Strings der Strom überwacht wird. Hierfür wird ein entsprechendes Messgerät in den Zuleitungen eingesetzt. Das vom Messgerät erzeugte Messsignal wird an eine Auswerteeinheit weitergeleitet. Bei Ausfall eines Moduls oder Strings verändert sich der gemessene Strom, so dass ein Fehler in dem betreffenden Modulfeld lokalisiert werden kann. Bei zu hohem Strom löst eine Sicherung aus.

Wenn mehrere Modulfelder vorhanden sind, dann wird jeder Plus- bzw. Minus-Anschluss eines solchen Modulfeldes mit dem Plus- bzw. Minus-Anschluss eines gemeinsamen Wechselrichters verbunden. Das heißt, für jedes Modulfeld ist über eine längere Distanz sowohl eine Plus-Leitung als auch eine Minus-Leitung erforderlich.

Die bekannte Verschaltung ist jedoch nicht optimal. Eine solche Anordnung zieht nämlich einen hohen Verdrahtungsaufwand nach sich. Die Verdrahtung ist daher teuer, insbesondere weil es sich hierbei um DC-Verdrahtung mit besonderen Isolations- bzw. Brandschutzanforderungen handelt.

Bei dieser Leitungsverlegung ist außerdem zu berücksichtigen, dass durch das Verdrahtungsprinzip Leitungen relativ dicht zueinander angeordnet sind. Beachtet müssen jedoch vorgegebene Sicherheitsaspekte, und zwar Leitungsabstände zwischen Plus und Minus sowie eine sogenannte GFDI-Verschaltung.

Außerdem entspricht bei einer Anordnung die Ausgangsspannung des Solargenerators direkt der Eingangsspannung des Solar-Wechselrichters. Die Generator-Spannung schwankt je nach Einstrahlungsintensität und temperatur. Bei hoher Intensität liegt die maximale Solargenerator-Spannung beispielsweise bei einigen hundert Volt. Eine höhere Eingangsspannung ist jedoch für den Wirkungsgrad der Anlage wünschenswert. Je höher die Solargenerator-Spannung ist, um so höher ist auch der Wirkungsgrad der Anlage.

Solche Modulfelder müssen also einerseits zweckmäßig verschaltet werden und andererseits eine hohe Spannung liefern.

Aus der US 2005/0139259 A1 ist eine Photovoltaikanlage mit einem Photovoltaik-array bzw. einem Photovoltaikfeld bekannt. Dieser ist mit einem bipolaren Anschluss versehen. Es ist ein String für den Pluspol und ein String für den Minuspol vorhanden. Die Strings sind nicht direkt geerdet, sondern über einen Erdungsanschluss eines Wechselrichters geerdet.

Der Erfindung liegt die Aufgabe zugrunde, eine Anordnung zu finden, mit der der Verdrahtungsaufwand reduziert wird und eine höhere Gesamtspannung des Solargenerators möglich ist, insbesondere höher als eine normativ vorgegebene Maximalspannung, wobei damit ein höherer Wirkungsgrad der Anlage erreicht wird. Zudem sollen unter Beachtung vorgegebener Sicherheitsaspekte die Abstände zwischen Plus- und Minus-Leitungen sowie eine GFDI-Erdung verbessert werden.

Diese Aufgabe wird durch eine Anordnung mit den kennzeichnenden Merkmalen des Anspruches 1 in Verbindung mit seinen Oberbegriffsmerkmalen gelöst.

Durch die Erfindung wird durch ein dem Plus-Pol zugeordnetes erstes Modulteilfeld und ein dem Minus-Pol zugeordnetes Modulteilfeld der Verdrahtungsaufwand deutlich reduziert, wobei ein Teil der Plus- und Minus-Leitungen verkürzt bzw. sogar entfallen kann.

Ein weiterer Vorteil der erfindungsgemäßen Anordnung ist auch, dass eine höhere Gesamtspannung des Solargenerators möglich ist, was einerseits den Wirkungsgrad verbessert und andererseits einen geringeren Leitungsquerschnitt erlaubt, da für die gleiche Leistung ein geringerer Strom notwendig ist. Auch ist eine RFID-Erdung möglich.

Die Erfindung beruht auf dem Gedanken, eine Aufteilung des Generatorfeldes in mindestens zwei Modulteilfelder unter Beachtung der zulässigen Abstände zwischen den Generatorfeldem und eine direkte Erdung der Modulfelder anzustreben.

Wird das Gesamtfeld in zwei Modulteilfelder aufgeteilt, ist der eine DC-Anschluss des ersten Modulteilfeldes mit dem ausgangsseitigen Pluspol Plus und der andere mit Erde (GND) verbunden. Das zweite Modulteilfeld ist mit dem ausgangsseitigen Minuspol Minus und Erde (GND) verbunden.

Innerhalb dieser Modulteilfelder tritt keine Spannung größer einer normativ vorgegebenen Maximalspannung auf. Insgesamt ist die Ausgangsspannung zwischen dem Plus- und dem Minusanschluss jedoch doppelt so hoch wie die normativ vorgegebene Maximalspannung.

Erfindungsgemäß sind die Teilmodulfelder und ihre zugehörigen Plus- und Minus-Leitungen mit einem Sicherheitsabstand versehen. Zwischen den Modulen bzw. den Plus- und Minus-Zuleitungen werden so die normativ vorgegebenen Sicherheitsabstände eingehalten.

Erfindungsgemäß sind der Minuspol des ersten Modulteilfeldes modulnah mit Erde verbunden und der Pluspol des zweiten Modulteilfeldes modulnah mit Erde verbunden. Durch diese modulnahe Erdung eines Modul-Anschlusses der Module wird der Verdrahtungsaufwand reduziert, wobei die geerdeten Leitungen nicht zum Wechselrichter über eine lange Distanz geführt werden müssen.

Weitere vorteilhafte Ausgestaltungen der Erfindung sind in den Unteransprüchen gekennzeichnet.

Eine bevorzugte Ausführungsform der modulnahen Erdung besteht darin, dass der Minuspol des ersten Teilmodulfeldes und der Pluspol des zweiten Modulteilfeldes modulnah miteinander verbunden sind und gleichzeitig modulnah mit Erde verbunden sind.

Zweckmäßigerweise sind die einzelnen Modulteilfelder von einem Modulschutz, insbesondere einem Zaun oder einer Mauer, voneinander abgegrenzt. Durch diese Schutzmaßnahme wird ein Zutritt zu den Modulfeldern für unbefugte Personen verhindert. Eine Gefährdung vor Berührung spannungsführender Teile sowie Vandalismus, Diebstahl oder dergleichen wird ebenfalls verhindert.

Eine bevorzugte Weiterbildung der Erfindung zeichnet sich dadurch aus, dass die Photovoltaikmodule als Strings angeordnet sind, wobei eine Absicherung der einzelnen Strings mit Sicherungen derart erfolgt, dass bei einem Erdschluss innerhalb des Strings der Strom über die Photovoltaikmodule des Strings einen vorgegebenen Maximalwert nicht übersteigt. Dadurch kann ein Fehler in dem betreffenden Modulfeld lokalisiert werden. Bei zu hohem Strom löst die betreffende Sicherung aus. Die Absicherung der einzelnen Strings erfolgt mit so kleinen Sicherungen, dass bei einem Erdschluss innerhalb des Strihgs der Strom über die Solarmodule den vorgegebenen Maximalstrom nicht übersteigt.

Günstig ist es außerdem, dass jede Sicherung so ausgewählt ist, dass die Photovoltaikmodule vor Fehlerströmen geschützt werden, die größer sind als diejenigen Ströme, die typischwerweise durch ein GFDI-Gerät begrenzt werden. Die Sicherungen werden so gewählt, das die Fehlerströme im Erdschlussfall so begrenzt werden, als sei ein GFDI-Gerät verwendet worden.

Ausführungsbeispiele werden anhand der Zeichnungen näher erläutert, wobei weitere vorteilhafte Weiterbildungen der Erfindung und Vorteile derselben beschrieben sind.

Es zeigen:
- Fig. 1: eine Darstellung einer Verschaltung von Solarmodulen nach dem Stand der Technik,
- Fig. 2: eine Anordnung von Modulfeldern nach dem Stand der Technik,
- Fig. 3: eine Anordnung mit zwei Modulteilfeldern, bei denen jeweils ein Anschluss des Solarmoduls modulnah geerdet ist,
- Fig. 4: eine Anlage mit parallel geschalteten Modulteilfeldern,
- Fig. 5: eine weitere Anordnung zweier Modulteilfelder,
- Fig. 6: eine Anordnung nach der Ausführung gemäß Fig. 5 jedoch mit mehreren Modulteilfeldern,
- Fig. 7: eine Anordnung von Solarmodulen mit Stromüberwachung, und

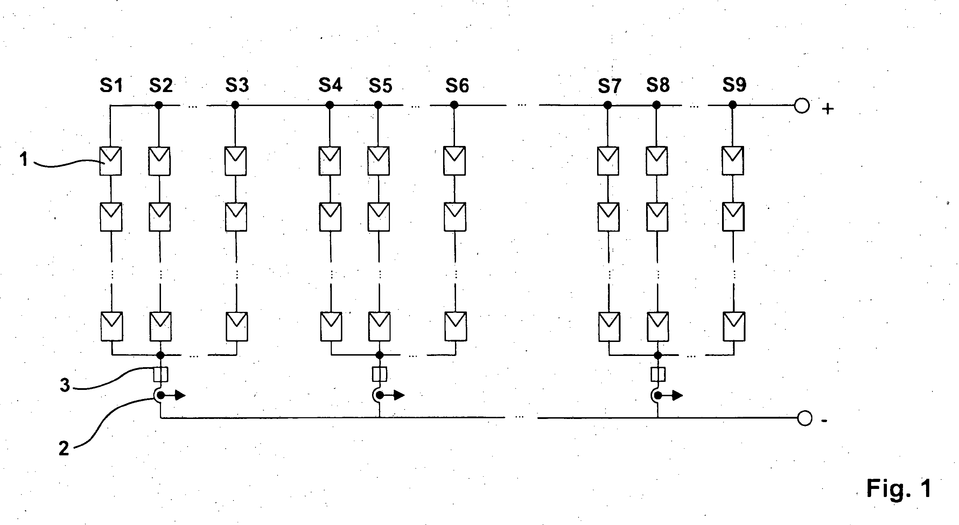

Fig. 1 zeigt eine Verschaltung von Photovoltaikmodulen 1 nach dem Stand der Technik. Diese Anordnung umfasst eine Vielzahl von Solargeneratoren bzw. Photovoltaikmodulen 1 auf und ist Teil eines Solarkraftwerks. Die Module 1 werden in Reihe und parallel verschaltet. Die Schaltung umfasst insgesamt neun Strings S1 bis S9, wobei jeweils drei Strings für eine Strommessung zusammengefasst sind.

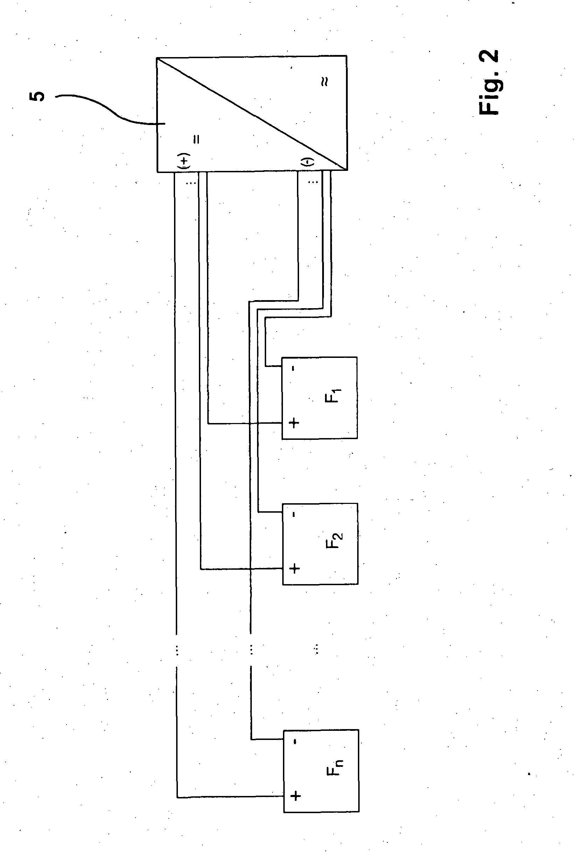

Die Strings S1 bis S9 wiederum sind parallel zu mehreren Modulfeldem F1, F2 bis Fn geschaltet, wie Fig. 2 zeigt.

Für jeden String, wie Fig. 1 zeigt, wird für eine bestimmte Anzahl von parallelen Strings der Strom überwacht. Ein entsprechendes Messgerät 2 zur Strommessung ist in den Zuleitungen geschaltet. Das Messsignal wird an eine Auswerteeinheit weitergeleitet. Bei Ausfall eines Moduls 1 oder der Strings S1 bis S9 verändert sich der gemessene Strom, so dass ein Fehler in dem betreffenden Modulfeld F1, F2 bis Fn lokalisiert wird. Weiterhin ist im Strommesspfad eine Sicherung 3 geschaltet. Bei einem zu hohen Strom löst die Sicherung 2 aus.

Wie Fig. 2 veranschaulicht, ist jeder Plus- bzw. Minus-Anschluss eines solchen Modulfeldes F1, F2 ... Fn mit dem Plus- bzw. Minus-Anschluss eines gemeinsamen Wechselrichters 5 verbunden. Das heißt, für jedes Modulfeld F1, F2 ... Fn ist über eine längere Distanz sowohl eine Plus-Leitung als auch eine Minus-Leitung erforderlich.

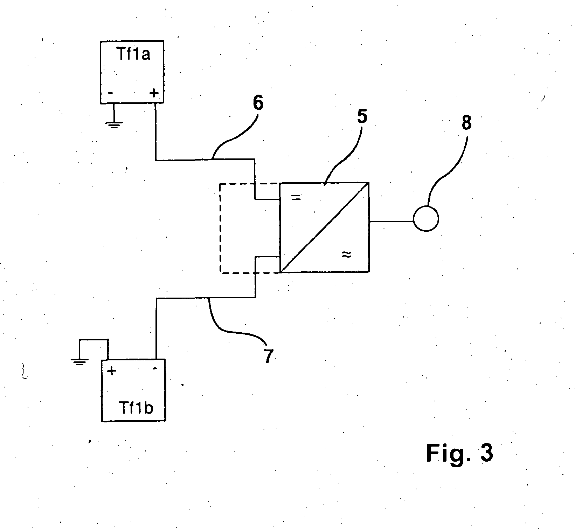

Fig. 3 zeigt eine erfindungsgemäße Anordnung mit zwei Modulteilfeldern Tf1a und Tf1b, bei denen jeweils ein Anschluss modulnah geerdet wird. Diese sind an dem Wechselrichter 5 angeschlossen, der ausgangsseitig mit einem Transformator 8 verbunden ist, der an das Stromversorgungsnetz angeschlossen ist.

Diese Aufteilung ist insbesondere für große Solarkraftwerke, d.h. Kraftwerke mit einer Leistung von mindestens 10 kW, vorzugsweise über 100 kW sinnvoll. Aber auch kleinere Kraftwerke können dieses Prinzip nutzen.

Der Plus-Anschluss des Modulteilfeldes Tf1a ist mit dem Plus-Anschluss des Wechselrichters 5 verbunden. Der Minus-Anschluss ist modulnah geerdet. Der Minus-Anschluss vom Modulteilfeld Tf1b ist mit dem Minus-Anschluss des Wechselrichters 5 verbunden. Der Plus-Anschluss ist modulnah geerdet. Die Plus- bzw. Minus-Zuleitungen 6, 7 können räumlich getrennt dem Wechselrichter 5 zugeführt werden. Im gestrichelt dargestellten Anschlussbereich des Wechselrichters werden die Zuleitungen 6, 7 zusammengeführt. Zwischen den Modulen bzw. den Plus- und Minus-Zuleitungen 6, 7 werden so die normativ vorgegebenen Sicherheitsabstände eingehalten. Der Sicherheitsabstand beträgt etwa 2,5 m, also eine Distanz, die mit ausgestreckten Armen nicht überbrückt werden kann.

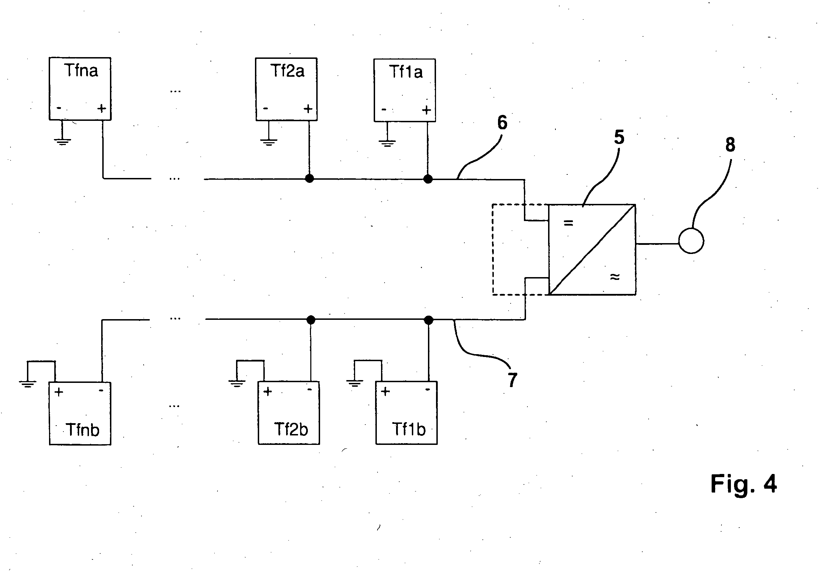

Zu den in Fig. 3 dargestellten Modulteilfeldern Tf1a, Tf1b können weitere Modulteilfeld-Paare Tf2a, Tf2b bis Tfna, Tfn parallel geschaltet werden, wie Fig. 4 zeigt. Dadurch erhöht sich die Gesamtausgangsleistung der Anlage.

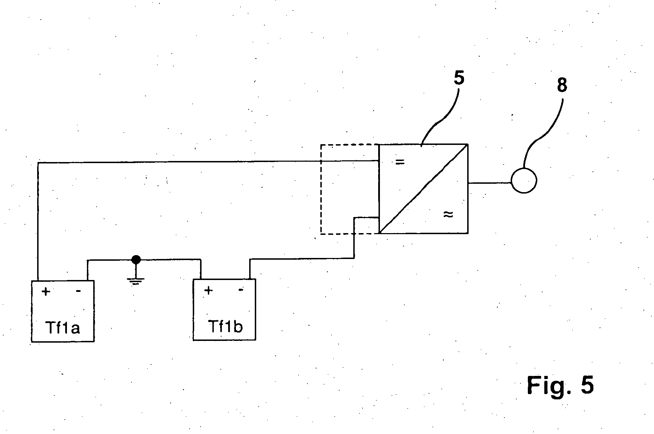

Eine weitere Möglichkeit der Anordnung zweier Modulteilfelder Tf1a und Tf1b zeigt Fig.5. Wie auch bei der Ausführungsform gemäß Fig. 3 ist der Plus-Anschluss vom Modulteilfeld Tf1a mit dem Plus-Anschluss des Wechselrichters verbunden und der Minus-Anschluss vom Modulteilfeld Tf1b ist mit dem Minus-Anschluss des Wechselrichters verbunden. Im Gegensatz zur in Fig.3 dargestellten Lösung sind jedoch der Minus-Anschluss vom Modulteilfeld Tf1a und der Plus-Anschluss vom Modulteilfeld Tf1b miteinander verbunden und geerdet.

Die Plus- bzw. Minus-Zuleitungen 6, 7 können wieder räumlich getrennt dem Wechselrichter 5 zugeführt werden. Im Anschlussbereich des Wechselrichters 5, der auch hier gestrichelt dargestellt ist, werden die Zuleitungen 6, 7 zusammengeführt. Zwischen den Modulen bzw. den Plus- und Minus-Zuleitungen 6, 7 werden so die normativ vorgegebenen Sicherheitsabstände eingehalten.

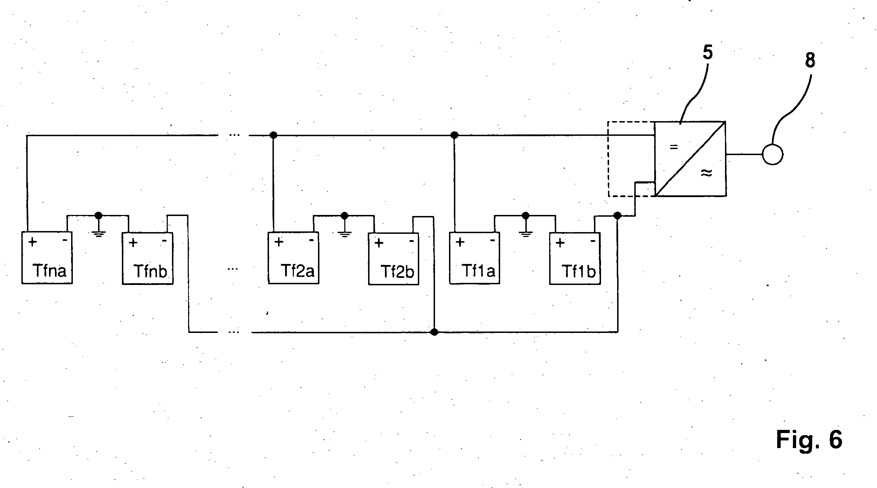

Zu den in Fig.5 dargestellten Modulteilfeldern Tf1 a, Tf1 b können ebenfalls weitere Modulteilfeld-Paare Tf2a, Tf2b bis Tfna, Tfnb parallel geschaltet werden, wie Fig. 6 zeigt, so dass sich die Gesamtausgangsleistung der Anlage weiter erhöht.

Die gezeigten Ausführungsformen ermöglichen eine erhebliche Reduzierung der Leitungslängen und damit verbunden eine Reduzierung der Kosten aber auch der Leitungsverluste.

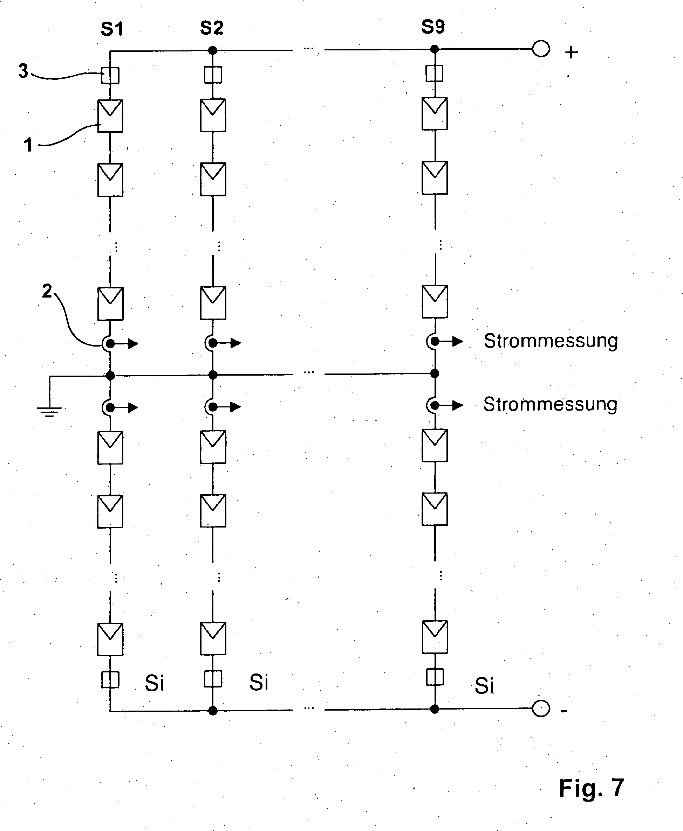

Wie Fig. 7 zeigt, erfolgt eine Absicherung der einzelnen Strings S1, S2 bis S9 mit so kleinen Sicherungen 3, dass bei einem Erdschluss innerhalb des Strings S1, S2 bis S9 der Strom über die Photovoltaikmodule 1 einen vorgegebenen Maximalstrom nicht übersteigt. Die Sicherung 3 ist so dimensioniert, dass sie unterhalb eines Stromwerts auslöst, der durch die Herstellung zur Rückstromfestigkeit der Solarmodule vorgegeben ist.

Wenn ein Erdschluss erfolgt, dann erhöht sich der durch die Sicherung 3 fließende Strom. Die Entdeckung ungewollter Erdschlüsse erfolgt indirekt, da im Fall ungewollter Erdschlüsse eine oder mehrere Stringsicherungen 3 angesprochen haben und sich der durch das Strommessgerät 2 überwachte Strom entsprechend ändert.

Analog zur Fig. 1 können auch eine Vielzahl von Strings mit nur einer Strommessung überwacht werden. Die Strings werden dann parallel geschaltet. Die Strommessung erfolgt zwischen dem Verknüpfungspunkt der parallel geschalteten Strings und Erde.

## Patentansprüche

1. Photovoltaikanlage zur Umwandlung einer Solarspannung in eine Wechselspannung zur Einspeisung in ein Energieversorgungsnetz, mit mehreren Photovoltaikmodulfeldern (F1, F2,..., Fn) bestehend aus mehreren in Reihe und parallel geschalteten Photovoltaikmodulen (1) und mindestens einem Wechselrichter (5) mit einem Plus- und einem Minuseingang, wobei die Photovoltaikmodule als Strings (S1...S9) angeordnet sind,
**dadurch gekennzeichnet,**
**dass** jedes Photovoltaikmodulfeld (F1,F2,...,Fn) in mindestens zwei identische Modulteilfelder (TF1 a, TF1 b) aufgeteilt ist, wobei der Pluspol des ersten Modulteilfeldes (TF1a) den Pluspol einer Generator-Ausgangsspannung darstellt und mit dem Pluspol des Wechselrichters (5) verbunden ist und der Minuspol des ersten Modulteilfeldes (TF1 a) mit Erde verbunden ist, und
der Pluspol des zweiten Modulteilfeldes (TF1b) mit Erde verbunden ist und der Minuspol des zweiten Modulteilfeldes (TF1b) den Minuspol der
Generator-Ausgangsspannung darstellt und mit dem Minuspol des Wechselrichters (5) verbunden ist, dass die Teilmodulfelder (TF1 a, TF1 b) und ihre zugehörigen Plus- und Minus-Leitungen (6, 7) einen Sicherheitsabstand aufweisen und dass der Minuspol des ersten Modulteilfeldes (TF1a) modulnah mit Erde verbunden ist und der Pluspol des zweiten Modulteilfeldes (TF1b) modulnah mit Erde verbunden ist, wobei die Modulteilfelder (TF1a, TF1b)
direkt geerdet sind.

2. Photovoltaikanlage nach Anspruch 1,
**dadurch gekennzeichnet,**
**dass** der Minuspol des ersten Modulteilfeldes (TF1a) und der Pluspol des zweiten Modulteilfeldes (TF1b) modulnah miteinander verbunden sind und gleichzeitig modulnah mit Erde verbunden sind.

3. Photovoltaikanlage nach einem der Ansprüche 1 oder 2,
**dadurch gekennzeichnet,**
**dass** zwischen den Modulteilfeldern (TF1 a, TF1 b), die mit Minuspol verbunden sind und den Modulteilfeldern (TF1 a, TF1 b), die mit dem Pluspol verbunden sind, ein Sicherheitsabstand vorgesehen ist.

4. Photovoltaikanlage nach einem der vorherigen Ansprüche,
**dadurch gekennzeichnet,**
**dass** die einzelnen Modulteilfelder (TF1a, TF1b) von einem Modulschutz, insbesondere einem Zaun oder einer Mauer, voneinander abgegrenzt sind.

5. Photovoltaikanlage nach einem der vorherigen Ansprüche,
**dadurch gekennzeichnet,**
**dass** die Leitungen von Modulteilfeldern (TF1a, TF1b), die mit dem Pluspol der Ausgangsspannung verbunden sind, und von Modulteilfeldern (TF1a, TF1b), die mit dem Minuspol der Ausgangsspannung verbunden sind, getrennt werden, so dass also zwischen ihnen ein Sicherheitsabstand vorhanden ist.

6. Photovoltaikanlage nach einem der vorherigen Ansprüche,
**dadurch gekennzeichnet,**
**dass** die Photovoltaikmodule (1) als Strings (S1,..., S9) angeordnet sind, wobei eine Absicherung der einzelnen Strings (S1,..., S9) mit Sicherungen (3) derart erfolgt, dass bei einem Erdschluss innerhalb des Strings (S1,..., S9) der Strom über die Photovoltaikmodule (1*) des Strings (S1,..., S9) einen vorgegebenen Maximalwert nicht übersteigt.

7. Photovoltaikanlage nach Anspruch 5,
**dadurch gekennzeichnet,**
**dass** jede Sicherung (3) so ausgewählt ist, dass die Photovoltaikmodule (1) vor Fehlerströmen geschützt werden, die größer sind als diejenigen Ströme, die typischweise durch ein GFDI-Gerät (10) begrenzt werden.

## Claims

1. A photovoltaic installation for transforming a solar voltage into an alternating voltage to be fed into a power grid with several photovoltaic module fields (F1, F2,..., Fn) consisting of several parallel and series-connected photovoltaic modules (1) and at least one inverter (5) with one positive and one negative input, the photovoltaic modules being disposed as strings (S1... S9), **characterized in that**
each photovoltaic module field (F1, F2,..., Fn) is divided into at least two identical module subfields (TF1a, TF1b), wherein the positive pole of the first module subfield (TF1a) constitutes the positive pole of a generator output voltage and is connected to the positive pole of the inverter (5) and the negative pole of the first module subfield (TF1a) is grounded, and the positive pole of the second module subfield (TF1b) is grounded and the negative pole of the second module subfield (TF1b) constitutes the negative pole of the generator output voltage and is connected to the negative pole of the inverter (5), that the module subfields (TF1a, TF1b) and their corresponding positive and negative lines (6, 7) comprise a safety clearance and that the negative pole of the first module subfield (TF1a) is grounded near the module, and the positive pole of the second module subfield (TF1b) is grounded near the module, the module subfields (TF1 a, TF1 b) being directly grounded.

2. The photovoltaic installation according to claim 1,
**characterized in that**
the negative pole of the first module subfield (TF1a) and the positive pole of the second module subfield (TF1b) are connected to each other near the modules and are at the same time grounded near the modules.

3. The photovoltaic installation according to one of the claims 1 or 2, **characterized in that**
a safety clearance is provided between the module subfields (TF1a, TF1b), which are connected to the negative pole and the module subfields (TF1 a, TF1 b), which are connected to the positive pole.

4. The photovoltaic installation according to one of the afore-mentioned claims,
**characterized in that**
the individual module subfields (TF1a, TF1b) are separated from each other by a module protection, more specifically a fence or a wall.

5. The photovoltaic installation according to one of the afore-mentioned claims,
**characterized in that**
the lines of module subfields (TF1a, TF1b) that are connected to the positive pole of the output voltage and of module subfields (TF1a, TF1b) that are connected to the negative pole of the output voltage, are separated so that a safety clearance is provided between them.

6. The photovoltaic installation according to one of the afore-mentioned claims,
**characterized in that**
the photovoltaic modules (1) are disposed as strings (S1,..., S9), the individual strings (S1,..., S9) being protected by means of fuses (3) in such a manner that in case of an accidental ground within the string (S1,..., S9), the current via the photovoltaic modules (1) of the string (S1,..., S9) does not exceed a given maximum value.

7. The photovoltaic installation according to claim 5,
**characterized in that**
each fuse (3) is chosen in such a manner that the photovoltaic modules (1) are protected against fault currents that are greater than the currents typically limited by a GFDI apparatus (10).

## Revendications

1. Installation photovoltaïque pour la conversion de tension solaire en une tension alternative en vue de l'injection dans un réseau d'alimentation électrique, comportant plusieurs champs de modules photovoltaïques (F1, F2,...Fn) constitués de plusieurs modules photovoltaïques (1) connectés en lignes et en parallèle et d'au moins un onduleur (5) avec une entrée positive et une entrée négative, dans lequel les modules photovoltaïques sont disposés selon des chaînes (S1...S9).
**caractérisée en ce que,**
chaque champ de modules photovoltaïques (F1, F2,...Fn) est subdivisé en au moins deux champs de modules photovoltaïques partiels (TF1a, TF1b), dans lequel le pôle positif du premier champ de module photovoltaïque partiel (TF1 a) représente le pôle positif d'un générateur de tension de sortie et est connecté au pôle positif du onduleur (5) et le pôle négatif du premier champ de module photovoltaïque partiel (TF1 a) est relié à la terre, et
le pôle positif du deuxième champ de module photovoltaïque partiel (TF1 b) est connecté à la terre et le pôle négatif du deuxième module photovoltaïque partiel (TF1b) représente le pôle négatif du générateur de tension de sortie et est connecté au pôle négatif du onduleur (5), **en ce que** les champs de modules photovoltaïques partiels (TF1a, TF1b) et leurs conducteurs positifs et négatifs correspondants (6, 7) présentent un écartement de sécurité et **en ce que** le pôle négatif du premier champ de module photovoltaïque partiel (TF1a) est relié à la terre à proximité du module et le pôle positif du deuxième champ de module photovoltaïque partiel (TF1 b) est connecté à la terre à proximité du module, dans lequel les champs de modules photovoltaïques partiels (TF1 a, TF1 b) sont directement mis à la terre.

2. Installation photovoltaïque selon la revendication 1, **caractérisée en ce que,**
le pôle négatif du premier champ de module photovoltaïque partiel (TF1a) et le pôle positif du deuxième champ de module photovoltaïque partiel (TF1 b) sont connectés ensemble à proximité de module et sont simultanément reliés à la terre à proximité de module.

3. Installation photovoltaïque selon l'une des revendications 1 ou 2, **caractérisée en ce que,**
un écartement de sécurité est prévu entre les champs de modules photovoltaïques partiels (TF1 a, TF1 b) qui sont connectés au pôle négatif et les champs de modules photovoltaïques partiels (TF1a, TF1b) qui sont connectés au pôle positif.

4. Installation photovoltaïque selon l'une des revendications précédentes,
**caractérisée en ce que,**
les champs de modules photovoltaïques partiels individuels (TF1a, TF1b) sont séparés les uns des autres par un module de sécurité, en particulier par une grille ou un mur.

5. Installation photovoltaïque selon l'une des revendications précédentes,
**caractérisée en ce que,**
les conducteurs des champs de modules photovoltaïques partiels (TF1a, TF1b), qui sont connectés au pôle positif de la tension de sortie, et des champs de modules photovoltaïques partiels (TF1a, TF1b), qui sont connectés au pôle négatif de la tension de sortie, sont séparés de sorte qu'une distance de sécurité est prévue entre eux.

6. Installation photovoltaïque selon l'une des revendications précédentes,
**caractérisée en ce que,**
les modules photovoltaïques (1) sont disposés en chaînes (S1,....S9), dans lequel la sécurité des chaînes individuelles (S1,....S9) est assurée par des fusibles (3), de telle manière que, lors d'un défaut à la terre à l'intérieur des chaînes (S1,....S9), le courant circulant dans les modules photovoltaïques (1) des chaînes (S1,....S9), ne peut pas dépasser une valeur maximale prédéterminée.

7. Installation photovoltaïque selon la revendication 5, **caractérisée en ce que,**
chaque fusible (3) est choisi de telle manière que les modules photovoltaïques (1) sont protégés contre les courants de défauts, qui sont supérieurs aux courants qui sont typiquement protégés par un appareil GFDI (10).
